# EUROPEAN PATENT APPLICATION

(11) **EP 4 704 190 A1**
(43) Date of publication of application: **04.03.2026**
(21) Application number: 24796647.6
(22) Date of filing: 21.03.2024
(51) Int. Cl.: H01M 4/58, H01M 4/136, H01M 4/36

(54) **POSITIVE ELECTRODE MATERIAL FOR LITHIUM ION SECONDARY BATTERY, POSITIVE ELECTRODE FOR LITHIUM ION SECONDARY BATTERY, AND METHOD FOR MANUFACTURING POSITIVE ELECTRODE MATERIAL FOR LITHIUM ION SECONDARY BATTERY**

(30) Priority: 24.04.2023 JP 2023070867
(71) Applicant: KABUSHIKI KAISHA TOYOTA JIDOSHOKKI, Kariya-shi, Aichi 448-8671 (JP)
(72) Inventor: EGUCHI, Tatsuya, Kariya-shi, Aichi 448-8671 (JP); HARATA, Masanori, Kariya-shi, Aichi 448-8671 (JP); MATSUSHIRO, Dai, Kariya-shi, Aichi 448-8671 (JP); KIMIJIMA, Takeshi, Kariya-shi, Aichi 448-8671 (JP); FUKUNAGA, Ryo, Kariya-shi, Aichi 448-8671 (JP)
(74) Representative: TBK
(86) International application number: PCT/JP2024/010992
(87) International publication number: WO 2024/224889

(57) **Abstract**

A positive electrode material for a lithium-ion secondary battery includes granulated bodies 10 each having a core 11 and a carbon coating 12. The core 11 is made of olivine-type lithium manganese iron phosphate represented by a general formula LiMnₓFe_{y}PO₄ ("x" and "y" are numerical values satisfying "x + y = 1", "0 < x < 1", and "0 < y < 1"). The carbon coating 12 is formed on a surface of the core 11. The core 11 has a structure in which primary particles of the olivine-type lithium manganese iron phosphate are aggregated. The primary particles have a particle size of 100 nm or less. The granulated bodies 10 have a pore volume of 0.2 cm³/g or less in a pore size range of 2 nm to 300 nm, inclusive. The granulated bodies 10 have a carbon content of 1.8 mass% or greater and 3.0 mass% or less.

## Description

### TECHNICAL FIELD

The present disclosure relates to a positive electrode material for a lithium-ion secondary battery, a positive electrode for a lithium-ion secondary battery, and a method for manufacturing a positive electrode material for a lithium-ion secondary battery.

### BACKGROUND ART

Patent Literature 1 discloses a power storage device that includes a positive electrode, in which olivine-type lithium iron phosphate (LiFePO₄) is used as an active material. An olivine-structured positive electrode active material, such as the olivine-type lithium iron phosphate, has excellent heat stability.

### CITATION LIST

### Patent Literature

Patent Literature 1: JP2019-185920A

### SUMMARY OF INVENTION

### Technical Problem

A positive electrode of a lithium-ion secondary battery may be manufactured as follows. First, a slurry of a positive electrode mixture is applied to a surface of a positive electrode current collector. The positive electrode mixture contains a positive electrode active material, a binder, and a solvent. Then, the coating of the applied positive electrode mixture is dried to form a positive electrode active material layer on the surface of the positive electrode current collector. In this manufacturing process, in order to increase the capacity of the lithium-ion secondary battery, the coating of the positive electrode mixture may be formed relatively thick so as to increase a weight per unit area of the positive electrode active material layer. However, when the positive electrode active material includes an olivine-structured positive electrode active material, the positive electrode active material layer may crack due to shrinkage during the drying process. In particular, such a problem is likely to occur when the olivine-structured positive electrode active material is olivine-type lithium manganese iron phosphate (LiMnFePO₄).

### Solution to Problem

In one general aspect of the present disclosure, a positive electrode material is for a lithium-ion secondary battery. The positive electrode material includes granulated bodies. The granulated bodies each include a core and a carbon coating. The core is made of an olivine-type lithium manganese iron phosphate represented by a general formula LiMnₓFe_{y}PO₄ ("x" and "y" are numerical values satisfying "x + y = 1", "0 < x < 1", and "0 < y < 1"). The carbon coating is formed on a surface of the core. The core has a structure in which primary particles of the olivine-type lithium manganese iron phosphate are aggregated. The primary particles have a particle size of 100 nm or less. The granulated bodies have a pore volume of 0.2 cm³/g or less in a pore size range of 2 nm to 300 nm, inclusive. The granulated bodies have a carbon content of 1.8 mass% or greater and 3.0 mass% or less.

### BRIEF DESCRIPTION OF DRAWINGS

Fig. 1 is a micrograph of a cross section of a granulated body.
Fig. 2 is a schematic diagram showing the structure of primary particles in a cross section of the granulated body.
Fig. 3 is a cross-sectional view of a positive electrode.
Fig. 4A is a photograph of a positive electrode active material layer of Example 1.
Fig. 4B is a photograph of a positive electrode active material layer of Comparative Example 1.

### DESCRIPTION OF EMBODIMENTS

An embodiment of the present invention will now be described with reference to the drawings. In the following description, a positive electrode material for a lithium-ion secondary battery may be simply referred to as "positive electrode material", and a positive electrode for a lithium-ion secondary battery may be simply referred to as "positive electrode".

### Positive Electrode Material

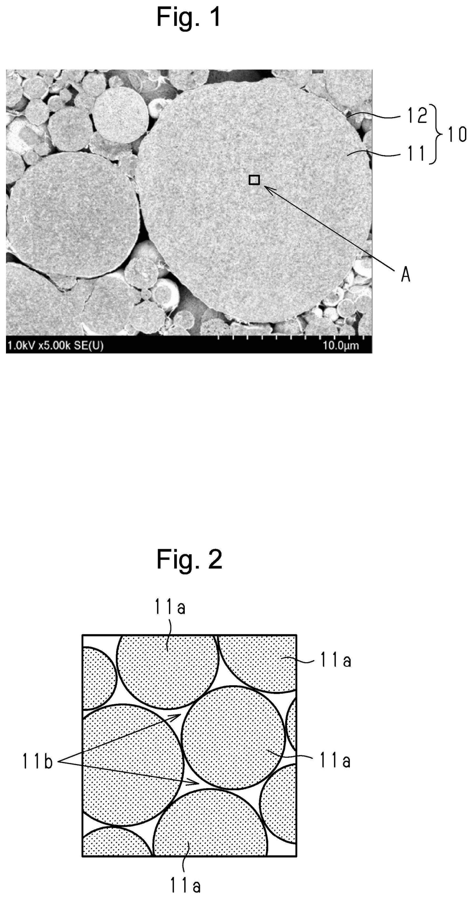

As shown in Fig. 1, a positive electrode material of the present embodiment includes granulated bodies 10 each having a core 11 and a carbon coating 12. The core 11 is made of olivine-type lithium manganese iron phosphate. The carbon coating 12 is formed on a surface of the core 11. The positive electrode material may contain only the granulated bodies 10. Alternatively, the positive electrode material may contain a component other than the granulated bodies 10.

The olivine-type lithium manganese iron phosphate forming the core 11 is an olivine-structured polyanionic compound represented by a general formula LiMnₓFe_{y}PO₄. In the general formula LiMnₓFe_{y}PO₄, "x" and "y" are numerical values that satisfy "x + y = 1", "0 < x < 1", and "0 < y < 1". Specific examples of the ranges of "x" and "y" include a case in which "0.5 ≤ x ≤ 0.9" and "0.1 ≤ y ≤ 0.5" are satisfied, and a case in which "0.6 ≤ x ≤ 0.8" and "0.2 ≤ y ≤ 0.4" are satisfied. The core 11 may contain a single type of olivine-type lithium manganese iron phosphate, or two or more types of olivine-type lithium manganese iron phosphate.

Fig. 2 schematically shows the structure of a region indicated by arrow A in Fig. 1. As shown in Fig. 2, the core 11 has a structure in which primary particles 11a of olivine-type lithium manganese iron phosphate are aggregated. Furthermore, the core 11 has pores 11b between the primary particles 11a.

The primary particles 11a have a particle size of 100 nm or less; preferably, 80 nm or less. Further, the particle size of the primary particles 11a is, for example, 20 nm or greater. The particle size of the primary particles 11a is a numerical value that may be obtained by a small angle X-ray scattering (SAXS) method. More specifically, the particle size of the primary particles 11a is a numerical value that may be defined as an average particle size (D50) obtained from a particle size distribution of the primary particles 11a, which is calculated assuming that the primary particles 11a are spherical.

The core 11 has a pore volume of 0.2 cm³/g or less; preferably, 0.15 cm³/g or less, in a pore size range of 2 nm to 300 nm, inclusive. Further, the pore volume is, for example, 0.05 cm³/g or greater; preferably, 0.1 cm³/g or greater. The pore volume may be obtained by a Barrett Joyner Halenda (BJH) method, in which nitrogen absorption and desorption measurement is performed on the granulated bodies 10. In the following description, a pore volume means the pore volume in the pore size range of 2 nm to 300 nm, inclusive.

The granulated bodies 10 have a carbon content of 1.8 mass% or greater; preferably, 1.9 mass% or greater, and more preferably, 2.0 mass% or greater. If the carbon content is less than 1.8 mass%, the carbon coating 12 is unable to cover the entire surface of the core 11, such that the surface of the core 11 may be partially exposed. This may adversely affect film-forming property of an active material layer, which will be described later. Furthermore, the carbon content is 3.0 mass% or less; preferably, 2.7 mass% or less. The carbon content may be measured by using a carbon/sulfur analysis apparatus (CS analyzer).

The content of the olivine-type lithium manganese iron phosphate in the granulated bodies 10 is, for example, 95 mass% or greater; preferably, 96 mass% or greater. Further, the above content is 99 mass% or less; preferably, 98 mass% or less.

The granulated bodies 10 may contain a component other than olivine-type lithium manganese iron phosphate and carbon. In this case, the content of such a component is, for example, 2 mass% or less.

The granulated bodies 10 have an average particle size (D50) of, for example, 3.0 µm or greater; preferably, 5.0 µm or greater. Further, the average particle size (D50) of the granulated bodies 10 is, for example, 30 µm or less; preferably, 20 µm or less. The average particle size of the granulated bodies 10 may be measured by using, for example, a laser-diffraction type particle size analyzer.

### Method for Manufacturing Positive Electrode Material

An example of a method for manufacturing the positive electrode material will now be described.

The present example of a method for manufacturing the positive electrode material includes a mixing step, a pulverizing step, a drying step, and a calcining step. The positive electrode material is manufactured by performing the mixing step, the pulverizing step, the drying step, and the calcining step in this order.

### Mixing Step

The mixing step is a step of mixing particles of olivine-type lithium manganese iron phosphate, an aqueous solvent, a carbon source, and a carboxylic acid, to prepare a first slurry.

The particles of olivine-type lithium manganese iron phosphate are particles of an olivine-structured polyanionic compound represented by a general formula LiMnₓFe_{y}PO₄. In the general formula LiMnₓFe_{y}PO₄, "x" and "y" are numerical values that satisfy "x + y = 1", "0 < x < 1", and "0 < y < 1". Specific examples of the ranges of "x" and "y" include a case in which "0.5 ≤ x ≤ 0.9" and "0.1 ≤ y ≤ 0.5" are satisfied, and a case in which "0.6 ≤ x ≤ 0.8" and "0.2 ≤ y ≤ 0.4" are satisfied. The particles of olivine-type lithium manganese iron phosphate may contain a single type of olivine-type lithium manganese iron phosphate, or two or more types of olivine-type lithium manganese iron phosphate.

The particles have an average particle size (D50) of, for example, 3.0 µm or greater; preferably, 5.0 µm or greater. Further, the average particle size (D50) of the particles is, for example, 30 µm or less; preferably, 20 µm or less.

The particles of olivine-type lithium manganese iron phosphate may be produced as follows. First, a Li source, such as lithium hydroxide, a Mn source, such as a manganese compound, an Fe source, such as an iron compound, a PO₄ source, such as an orthophosphoric acid, and water are mixed to prepare a first precursor slurry. Next, the Li source, the Mn source, and the Fe source contained in the first precursor slurry are pulverized by using a pulverizing mill, such as a bead mill. This obtains a second precursor slurry that contains pulverized materials of the Li source, the Mn source, and the Fe source. Then, the second precursor slurry is dried by, for example, spray drying to obtain granular bodies of the dried precursor. The dried precursor is calcined at a temperature of, for example, approximately 500°C to obtain the above-described particles.

The aqueous solvent is water or a mixed solvent of water and a non-aqueous solvent. Although not particularly limited, it is preferred that the water is, for example, ion-exchange water, which is treated with ion-exchange resin, or ultrapure water, which is treated by a reverse osmosis membrane water purification system. Examples of the non-aqueous solvent contained in the mixed solvent include solvents that are miscible with water, such as lower alcohol, acetone, tetrahydrofuran, ethylene glycol, N-methyl-2-pyrrolidone, dimethylformamide, dimethylacetamide, acetonitrile, dimethyl sulfoxide, and the like. A single type of the non-aqueous solvent may be used alone. Alternatively, two or more types of the non-aqueous solvent may be used in combination. Preferably, a volume percent of the water to the mixture solvent is, for example, 50 volume% or greater and 99.9 volume% or less; and more preferably, 60 volume% or greater and 99 volume% or less.

The carbon source may be, for example, an organic compound. Examples of the organic compound include glucose, fructose, galactose, mannose, maltose, sucrose, lactose, glycogen, pectin, alginic acid, glucomannan, chitin, hyaluronic acid, chondroitin, agarose, polyether, polyhydric alcohol, polyvinyl alcohol, polyvinylpyrrolidone, cellulose, starch, gelatin, carboxymethyl cellulose, methyl cellulose, hydroxy methyl cellulose, hydroxy ethyl cellulose, polyacrylic acid, polystyrene sulfonic acid, polyacrylamide, and polyvinyl acetate. Examples of the polyhydric alcohol include polyethylene glycol, polypropylene glycol, polyglycerol, and glycerin. A single type of the carbon source may be used alone. Alternatively, two or more types of the carbon source may be used in combination.

Examples of the carboxylic acid include citric acid, formic acid, acetic acid, propionic acid, butanoic acid, pentanoic acid, malic acid, fumaric acid, tartaric acid, ascorbic acid, gluconic acid, and polyacrylic acid. A single type of the carboxylic acid may be used alone. Alternatively, two or more types of the carboxylic acid may be used in combination. Citric acid is preferred among the above carboxylic acids. This will be described in detail later.

Mixing amounts of the particles of olivine-type lithium manganese iron phosphate, the aqueous solvent, the carbon source, and the carboxylic acid in the first slurry will now be described.

The mixing amount of the aqueous solvent relative to 100 parts by mass of olivine-type lithium manganese iron phosphate particles is, for example, 40 parts by mass or greater; preferably, 50 parts by mass or greater. Further, the mixing amount of the aqueous solvent relative to 100 parts by mass of olivine-type lithium manganese iron phosphate particles is, for example, 80 parts by mass or less; preferably, 70 parts by mass or less.

The mixing amount of the carboxylic acid relative to 100 parts by mass of olivine-type lithium manganese iron phosphate particles is, for example, 2 parts by mass or greater; preferably, 3 parts by mass or greater. Further, the mixing amount of the carboxylic acid relative to 100 parts by mass of olivine-type lithium manganese iron phosphate particles is, for example, 15 parts by mass or less; preferably, 12 parts by mass or less. In a range in which the mixing amount of the carboxylic acid is a certain amount or less, the pore volume in the cores 11 of the granulated bodies 10 decreases as the mixing amount of the carboxylic acid increases. Further, as the mixing amount of the carboxylic acid increases, a pore size distribution in the cores 11 of the granulated bodies 10 shifts toward the side of relatively small sizes. In this manner, the pore volume in the cores 11 of the granulated bodies 10 may be controlled by adjusting the mixing amount of the carboxylic acid.

In the mixing step, the carbon source is mixed with the particles of olivine-type lithium manganese iron phosphate, such that a total carbon amount becomes a specific amount. The total carbon amount corresponds to a total mass of the carbon contained in the carbon source and the carbon contained in the carboxylic acid. Specifically, the mixing amount of the carbon source is set so that, for example, the total carbon amount relative to 100 parts by mass of olivine-type lithium manganese iron phosphate particles is 1.8 parts by mass or greater; preferably, 1.9 parts by mass or greater. Further, the mixing amount of the carbon source is set so that, for example, the total carbon amount relative to 100 parts by mass of olivine-type lithium manganese iron phosphate particles is 5.0 parts by mass or less; preferably, 3.0 parts by mass or less. The carbon content of the granulated bodies 10 may be controlled by adjusting the total carbon amount based on the mixing amount of the carbon source.

The first slurry may contain a component other than the particles of olivine-type lithium manganese iron phosphate, the aqueous solvent, the carbon source, and the carboxylic acid. Such a component may be, for example, a dispersant.

### Pulverizing Step

The pulverizing step is a step of pulverizing the particles of olivine-type lithium manganese iron phosphate contained in the first slurry to prepare a second slurry that contains a pulverized material of the particles. The pulverizing step corresponds to a step of pulverizing the particles of olivine-type lithium manganese iron phosphate under the presence of the aqueous solvent, the carbon source, and the carboxylic acid, so as to prepare the second slurry.

The pulverized material of the particles as an average particle size (D50) of, for example, 20 nm or greater; preferably, 30 nm or greater. Further, the average particle size (D50) of the pulverized material of the particles is, for example, 100 nm or less; preferably, 90 nm or less. The particle size of the primary particles 11a of the granulated bodies 10 may be reduced by decreasing the average particle size (D50) of the pulverized material of the particles.

The particles of olivine-type lithium manganese iron phosphate may be pulverized in the first slurry by any pulverization process. A pulverization process may be performed by, for example, a pulverizer, such as a bead mill, a hammer mill, an agitation mill, a jet mill, a ball mill, or the like. The pulverization temperature is, for example, in a range of 10°C to 50°C, inclusive.

When pulverizing the particles of olivine-type lithium manganese iron phosphate, some of the metal (Li, Mn, and Fe) contained in the particles are eluted into the slurry. In the calcining step performed later, the eluted metal may cause necking, in which the metal forms a neck between particles of the pulverized material, that is, between the primary particles 11a in the cores 11 of the granulated bodies 10. If a positive electrode material containing the granulated bodies 10, in which a relatively large amount of necking is formed, is used as the positive electrode of a lithium-ion secondary battery, the battery performance qualities of the lithium-ion secondary battery may be reduced.

In the present embodiment, the first slurry contains the carboxylic acid, thereby avoiding occurrence of necking. More specifically, the carboxylic acid traps the eluted metal in the slurry, so that the eluted metal will not come into contact with the surfaces of the pulverized material of olivine-type lithium manganese iron phosphate particles; particularly, new surfaces formed by pulverization. This avoids occurrence of necking, in which the eluted metal forms a neck between the particles of the pulverized material.

Therefore, from the aspect of avoiding occurrence of necking, it is preferable that the carboxylic acid for the first slurry has a high performance of capturing Li, Mn, and Fe, which are elution metals. Table 1 shows binding energies of various types of carboxylic acids relative to Li, Mn, and Fe. The values indicating binding energies in Table 1 are each obtained as a difference in the energy before and after formation of a complex of the carboxylic acid and the eluted metal. A smaller value represents a higher performance of trapping the eluted metal. The values indicating binding energies in Table 1 are calculated by computer-aided engineering (CAE). As shown in Table 1, citric acid has a lowest binding energy relative to each one of the elution metals, Li, Mn, and Fe. Thus, from the aspect of avoiding occurrence of necking, it is preferred that the carboxylic acid is citric acid.

**Table 1**

| | **Binding Energy (eV)** | | |
|---|---|---|---|
| | **Li** | **Mn** | **Fe** |
| **Citric Acid** | **1.5** | **2.0** | **1.1** |
| **Formic Acid** | **2.1** | **2.6** | **1.9** |
| **Acetic Acid** | **2.2** | **2.6** | **1.9** |
| **Malic Acid** | **2.1** | **2.5** | **1.9** |
| **Fuseric Acid** | **2.0** | **2.6** | **2.0** |
| **Tartaric Acid** | **1.8** | **2.5** | **1.9** |
| **Ascorbic Acid** | **2.2** | **2.9** | **2.3** |
| **Guconic Acid** | **2.1** | **2.8** | **2.1** |
| **Polyacrylic Acid** | **2.0** | **2.9** | **2.1** |

### Drying Step

The drying step is a step of spray drying the second slurry to obtain aggregates of the pulverized material. Examples of a spraying process in the spray drying include, for example, a disc spraying process and a spraying process performed by a pressurized nozzle, a pressurized two-fluid nozzle, a pressurized four-fluid nozzle, or the like. The spray temperature in the spray drying is, for example, in a range of 180°C to 300°C, inclusive.

### Calcining Process

The calcining step is a step of calcining the aggregates obtained by the drying step to carbonize the carbon source contained in the aggregates. The calcining step may be performed under any condition that allows for carbonization of the carbon source. The calcining temperature in the calcining step is, for example, in a range of 500°C to 750°C, inclusive. The calcining time in the calcining step is, for example, in a range of one hour to twelve hours, inclusive. The atmosphere in the calcining step is, for example, non-oxidizing atmosphere. Examples of the non-oxidizing atmosphere include, for example, an inert atmosphere, such as nitrogen (N₂) or argon (Ar), and a reducing atmosphere containing a reducing gas, such as hydrogen (H₂).

### Positive Electrode

A positive electrode 100 containing the positive electrode material of the present embodiment will now be described.

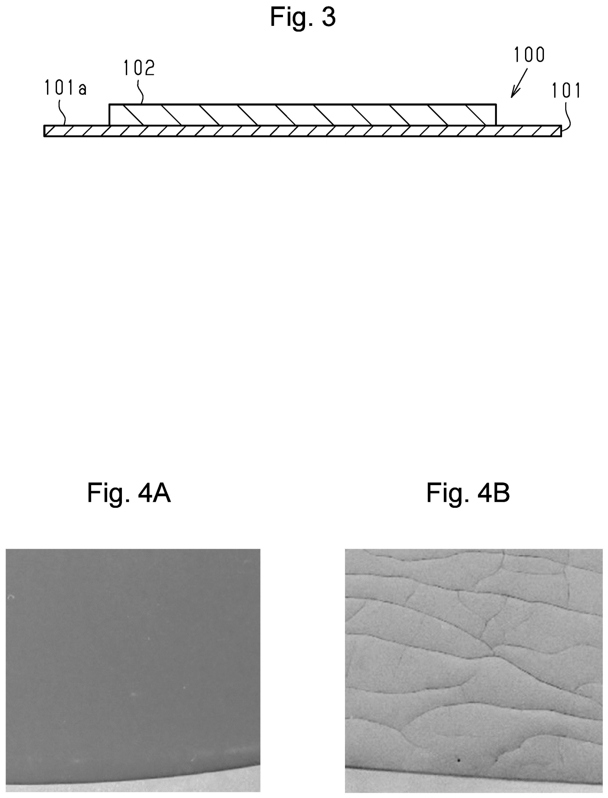

As shown in Fig. 3, the positive electrode 100 includes a positive electrode current collector 101 and a positive electrode active material layer 102. The positive electrode current collector 101 includes a first surface 101a. The positive electrode active material 102 is formed on the first surface 101a of the positive electrode current collector 101.

### Positive Electrode Current Collector

The positive electrode current collector 101 is a chemically inert electric conductor that allows for continuous flow of current through the positive electrode active material layer 102 during discharging or charging of the lithium-ion secondary battery. The positive electrode current collector 101 has a shape of, for example, a foil. The foil of the positive electrode current collector 101 has a thickness of, for example, 1 µm or greater; preferably, 10 µm or greater. Further, the thickness of the foil of the positive electrode current collector 101 is, for example, 100 µm or less; preferably, 60 µm or less.

Examples of the material of the positive electrode current collector 101 include a metal material, a conductive resin material, a conductive inorganic material, and the like. Examples of the metal material include copper, aluminum, nickel, titanium, and stainless steel. Examples of the conductive resin material include a resin obtained by, when necessary, adding a conducive filler to a conductive polymer material or a nonconductive polymer material. The positive electrode current collector 101 may have a multi-layer structure that includes one or more layers of the metal material or the conductive resin material.

An example of the positive electrode current collector 101 is an aluminum current collector. The aluminum current collector may be formed from aluminum alone. Alternatively, the aluminum current collector may be formed from an aluminum alloy. Examples of the aluminum alloy include an Al-Mn alloy, an Al-mg alloy, and an Al-mg-Si alloy.

The first surface 101a of the positive electrode current collector 101 may be covered by a known protective layer, such as a carbon coat layer or the like. The first surface 101a of the positive electrode current collector 101 may be processed by a known method, such as plating or the like.

### Positive Electrode Active Material Layer

The positive electrode active material layer 102 is arranged on the first surface 101a of the positive electrode current collector 101. The positive electrode active material layer 102 has a weight per unit area of, for example, 20 mg/cm² or greater; preferably, 30 mg/cm² or greater. Further, the weight per unit area of the positive electrode active material layer 102 is, for example, 150 mg/cm² or less; preferably, 100 mg/cm² or less. The positive electrode active material layer 102 has a thickness of, for example, 80 µm or greater; preferably, 100 µm or greater. Further, the thickness of the positive electrode active material layer 102 is, for example, 1000 µm or less; preferably, 800 µm or less.

The positive electrode active material layer 102 includes a positive electrode active material capable of storing and releasing a charge carrier, such as lithium ions. The positive electrode active material layer 102 includes the granulated bodies 10 as the positive electrode active material. The positive electrode active material layer 102 may contain another positive electrode active material other than the granulated bodies 10. Examples of the other positive electrode active material include a lithium composite metal oxide having a layered rock-salt structure, a metal oxide having a spinel structure, and polyanionic compounds other than olivine-type lithium manganese iron phosphate. A single type of the other positive electrode active material may be used alone. Alternatively, two or more types of the other positive electrode active material may be used in combination. When the other positive electrode active material is included, it is preferred that a mass percent of the granulated bodies 10 relative to the entire positive electrode active material is 50% or greater; and more preferably, 90% or greater.

The content of the positive electrode active material in the positive electrode active material layer 102 is not particularly limited. The content of the positive electrode active material in the positive electrode active material layer 102 is, for example, 95 mass% or greater; preferably, 96 mass% or greater. Further, the content of the positive electrode active material in the positive electrode active material layer 102 is, for example, 99.5 mass% or less; preferably, 99 mass% or less.

The positive electrode active material layer 102 may further contain a conductive aid for increasing the electric conductivity, a binder, an electrolyte (e.g., polymer matrix, ion-conductive polymer, or liquid electrolyte), an electrolyte-supporting salt (lithium salt) for increasing the ion-conductivity, or the like.

The conductive aid is added to increase the conductivity of the positive electrode 100. Examples of the conductive aid include acetylene black, carbon black, graphite, and carbon nanotubes.

Examples of the binder include a fluorine-containing resin (e.g., polyvinylidene fluoride, polytetrafluoroethylene, or fluorine rubber), a thermoplastic resin (e.g., polypropylene or polyethylene), an imide resin (e.g., polyimide or polyamide-imide), an alkoxysilyl group-containing resin, an acrylic resin (e.g., polyacrylic acid or polymethacrylic acid), a styrene-butadiene rubber, a carboxymethyl cellulose, an alginate (e.g., sodium alginate or ammonium alginate), a water-soluble cellulose ester crosslinked body, and a starch-acrylic acid graft polymer. These binders may be used alone or in combination. The solvent or the dispersant may be, for example, water, N-methyl-2-pyrrolidone, or the like.

### Method for Manufacturing Positive Electrode

An example of a method for manufacturing the positive electrode 100 will now be described.

The present example of the method for manufacturing the positive electrode 100 includes a preparation step of preparing a positive electrode mixture, and an active material layer formation step of forming a positive electrode active material layer using the positive electrode mixture. The positive electrode 100 is manufactured by performing the preparation step and the active material layer formation step in this order.

### Preparation Step

The preparation step is a step of preparing a positive electrode mixture that becomes the positive electrode active material layer 102 when solidified. The positive electrode mixture is a slurry containing a positive electrode active material, an aqueous binder, and an aqueous solvent.

The positive electrode active material added to the positive electrode mixture is the same as the positive electrode active material described above in the section of the positive electrode 100.

When a total mass of the solid content of the positive electrode mixture, that is, a mass of the positive electrode mixture excluding the aqueous solvent (hereafter, "solid content mass"), corresponds to 100 parts by mass, the content of the positive electrode active material in the positive electrode mixture is, for example, in a range of 70 parts by mass to 99 parts by mass, inclusive; preferably, in a range of 90 parts by mass to 98 parts by mass, inclusive.

The aqueous binder is a binder that is soluble or dispersible in an aqueous solvent. The aqueous binder is first dispersed or dissolved in an aqueous solvent, and then mixed with the positive electrode active material. The aqueous binder is not particularly limited, and may be a known aqueous binder contained in the positive electrode active material layer of a lithium-ion secondary battery.

Examples of the aqueous binder include a fluorine-containing resin (e.g., polyvinylidene fluoride, polytetrafluoroethylene, or fluorine rubber), a thermoplastic resin (e.g., polypropylene or polyethylene), an imide resin (e.g., polyimide or polyamide-imide), an alkoxysilyl group-containing resin, an acrylic resin (e.g., poly(meth)acrylic acid), a styrene-butadiene rubber, a carboxymethyl cellulose, an alginate (e.g., sodium alginate or ammonium alginate), a water-soluble cellulose ester crosslinked body, and a starch-acrylic acid graft polymer. The positive electrode active material layer 102 may contain a single type of the aqueous binder, or two or more types of the aqueous binder.

When the solid content mass of the positive electrode mixture corresponds to 100 parts by mass, the content of the aqueous binder in the positive electrode mixture is, for example, in a range of 1 part by mass to 30 parts by mass, inclusive; preferably, in a range of 1 part by mass to 5 parts by mass, inclusive.

The aqueous solvent contained in the positive electrode mixture may be the same as the aqueous solvent used in the method for manufacturing the positive electrode material. Although not particularly limited, the content of the aqueous solvent may be set so that, for example, a solid content ratio of the positive electrode mixture is 30 to 60 mass%.

The positive electrode mixture may further contain any of a conductive aid for increasing the electric conductivity, an electrolyte (e.g., polymer matrix, ion-conductive polymer, or electrolyte solution), an electrolyte-supporting salt (lithium salt) for increasing the ion-conductivity, and the like.

### Active Material Layer Formation Step

The active material layer formation step is a step of forming the positive electrode active material layer 102 on the first surface 101a of the positive electrode current collector 101 using the positive electrode mixture.

In the active material layer formation step, the positive electrode active material layer 102 may be formed on the first surface 101a of the positive electrode current collector 101 using a slurry of the positive electrode mixture by any process. A known process for forming the positive electrode 100, which includes the positive electrode current collector 101 and the positive electrode active material layer 102, may be employed.

In an example, the positive electrode mixture is applied to the first surface 101a of the positive electrode current collector 101, so as to form a coating having a predetermined thickness. Then, the formed coating is dried and solidified to obtain the positive electrode active material layer 102. The positive electrode mixture may be applied by a known method, such as roll coating, dip coating, doctor blade coating, spray coating, or curtain coating.

### Advantages

The present embodiment has the following advantages.
(1) The positive electrode material for a lithium-ion secondary battery includes the granulated bodies 10 each having the core 11 and the carbon coating 12. The core 11 is made of olivine-type lithium manganese iron phosphate represented by a general formula LiMnₓFe_{y}PO₄ ("x" and "y" are numerical values satisfying "x + y = 1", "0 < x < 1", and "0 < y < 1"). The carbon coating 12 is formed on the surface of the core 11. The core 11 has a structure in which the primary particles 11a of the olivine-type lithium manganese iron phosphate are aggregated. The primary particles 11a have a particle size of 100 nm or less. The granulated bodies 10 have a pore size of 0.2 cm³/g or less in a pore size range of 2 nm to 300 nm, inclusive. The granulated bodies 10 has a carbon content of 1.8 mass% or greater and 3.0 mass% or less.

The positive electrode material having the above-described configuration is used as the positive electrode active material contained in the positive electrode active material layer 102 of the positive electrode 100. The positive electrode active material layer 102 of the positive electrode 100 is manufactured by applying a slurry of a positive electrode mixture, which contains the positive electrode active material, to the first surface 101a of the positive electrode current collector 101 and drying the formed coating. Even if the coating of the positive electrode mixture is formed relatively thick to increase the weight per unit area of the positive electrode active material layer 102, cracking of the positive electrode active material layer 102 due to shrinkage of the coating during the drying process may be avoided when the positive electrode material having the above-described configuration is used as the positive electrode active material contained in the positive electrode mixture. In other words, the positive electrode material having the above-described configuration improves the film-forming property of the positive electrode active material layer 102 when manufacturing the positive electrode active material layer 102 having a relatively large weight per unit area, for example, 30 mg/cm² or greater. Furthermore, the positive electrode active material layer 102 having a relatively large weight per unit area may improve the battery performance qualities, for example, increase the capacity of the lithium-ion secondary battery. In this manner, the positive electrode material having the above-described configuration improves both the battery characteristics and the film-forming property when increasing the weight per unit area of the positive electrode active material layer, which contains olivine-type lithium manganese iron phosphate.

(2) The method for manufacturing the positive electrode material for a lithium-ion secondary battery includes a step (pulverizing step) of pulverizing particles of olivine-type lithium manganese iron phosphate represented by a general formula LiMnₓFe_{y}PO₄ ("x" and "y" are numerical values satisfying "x + y = 1", "0 < x < I", and "0 < y < 1") under the presence of an aqueous solvent, a carbon source, and a carboxylic acid to prepare a slurry (second slurry) containing a pulverized material of the olivine-type lithium manganese iron phosphate; a step (drying step) of spray drying the slurry (second slurry) to obtain aggregates of the pulverized material; and a step (calcining step) of calcining the aggregates to carbonize the carbon source contained in the aggregates.

With the above configuration, the particles are pulverized in the aqueous solvent under the presence of the carboxylic acid. Thus, the metal eluted during the pulverization may be trapped by the carboxylic acid. When the carboxylic acid traps the eluted metal, the eluted metal will not come into contact with the surfaces of the pulverized material of olivine-type lithium manganese iron phosphate particles; particularly, new surfaces formed by pulverization. This avoids occurrence of necking, in which the eluted metal forms a neck between the particles of the pulverized material. As a result, the adverse effect of necking on the battery performance qualities of the lithium-ion secondary battery may be minimized. Furthermore, as compared to when the carboxylic acid is added after the particles of olivine-type lithium manganese iron phosphate are pulverized, the pore volume of the granulated bodies 10 in a pore size range of 2 nm to 300 nm, inclusive, may be reduced.
(3) The carboxylic acid is citric acid. Citric acid has a relatively high performance of trapping Li, Mn, and Fe, which are metals that may be eluted during pulverization. This enhances advantage (2).
(4) The content of the carboxylic acid in the slurry relative to 100 parts by mass of olivine-type lithium manganese iron phosphate is 10 parts by mass or less. This allows for the manufacture of the granulated bodies 10 having a relatively small pore volume in a pore size range of 2 nm to 300 nm, inclusive.

### Modified Examples

The above embodiment may be modified as follows. The present embodiment and the following modifications can be combined as long as the combined modified examples remain technically consistent with each other.

In the method for manufacturing the positive electrode material, the timing of adding the carboxylic acid may be changed. For example, in the mixing step, a first slurry containing olivine-type lithium manganese iron phosphate particles, an aqueous solvent, and a carbon source is prepared. Then, in the pulverizing step, the olivine-type lithium manganese iron phosphate particles contained in the first slurry are pulverized while adding carboxylic acid or a carboxylic acid solution. Even in this case, the particles are pulverized in the aqueous solvent under the presence of the carboxylic acid. This allows the carboxylic acid to trap the eluted metal, thereby avoiding occurrence of necking.

### Examples

Examples further specifying the above embodiment will now be described.

### Preparation of Olivine-Type Lithium Manganese Iron Phosphate

The first precursor slurry was obtained by mixing pure water (12000 ml), LiOH (245 g) serving as a Li source, MnCO₃ (840 g) serving as a Mn source, Fe₂C₂O₄ (401 g) as serving an Fe source, and H₃PO₄ (1125 g) serving as a PO₄ source. After adding beads (medium particles) having a diameter of 0.3 mm to the obtained first precursor slurry, the Li source, the Mn source, and the Fe source contained in the first precursor slurry were pulverized by using a bead mill. This obtained the second precursor slurry containing the pulverized materials of the Li source, the Mn source, and the Fe source. The pulverizing process using the bead mill was performed so that the average particle size (D50) of the Li source, the Mn source, and the Fe source was in a range of 50 nm to 1000 nm, inclusive. Next, a spray dryer (drying outlet temperature: 200°C) was used to dry and granulate the second precursor slurry so as to obtain the dried precursor. The dried precursor was heated at 500°C for six hours under an N₂ atmosphere to obtain olivine-type lithium manganese iron phosphate represented by the general formula LiMn_{0.75}Fe_{0.25}PO₄.

### Preparation of Granulated Bodies

### Example 1

In pure water (405 ml), the prepared olivine-type lithium manganese iron phosphate (45 g), fructose serving as a carbon source, and citric acid (2 g) serving as a carboxylic acid were mixed to obtain the first slurry. The mixing amount of the fructose was set such that the total carbon amount, which is the total mass of carbon in the fructose and the citric acid, was 2.5 parts by mass relative to 100 parts by mass of olivine-type lithium manganese iron phosphate.

After adding beads (medium particles) having a diameter of 0.1 mm to the obtained first slurry, the bead mill was used to pulverize the olivine-type lithium manganese iron phosphate contained in the first slurry. This obtained the second slurry containing the pulverized material of olivine-type lithium manganese iron phosphate. The pulverizing process using the bead mill was performed such that the average particle size (D50) of the olivine-type lithium manganese iron phosphate was in a range of 60 nm to 100 nm, inclusive.

Then, a spray dryer (drying outlet temperature: 200°C) was used to dry and granulate the second slurry so as to obtain aggregates of the pulverized material. The obtained aggregates were heated at 650°C for six hours under an N₂ atmosphere to carbonize the fructose and the citric acid contained in the aggregates. In this manner, the granulated bodies of Example 1 included the core made of olivine-type lithium manganese iron phosphate and the carbon coating formed on the surface of the core.

### Examples 2 to 10 and Comparative Examples 1 to 4

Examples 2 to 10 and Comparative Examples 1 to 4 were obtained by changing the mixing amount of the citric acid. The granulated bodies of Examples 2 to 10 and Comparative Examples 1 to 4 were obtained in the same manner as Example 1 except in that the mixing amounts of the citric acid and the fructose in the first slurry were changed. Table 2 shows the mixing amount of the citric acid in each example. The mixing amount of the fructose in each example was adjusted in accordance with the mixing amount of the citric acid, such that the total carbon amount relative to 100 parts by mass of olivine-type lithium manganese iron phosphate was 2.5 parts by mass.

### Comparative Examples 5 to 7

Comparative Examples 5 to 7 were obtained by mainly increasing the degree of coarseness in the pulverizing process performed by using a bead mill.

The granulated bodies of Comparative Example 5 were obtained in the same manner as Example 1 except in that the mixing amount of the citric acid was set to 0, and that the pulverizing process using a bead mill was performed such that the average particle size (D50) of the olivine-type lithium manganese iron phosphate was in a range of 60 nm to 150 nm, inclusive.

The granulated bodies of Comparative Example 6 were obtained in the same manner as Example 5 except in that the pulverizing process using a bead mill was performed such that the average particle size (D50) of olivine-type lithium manganese iron phosphate was in a range of 100 nm to 120 nm, inclusive.

The granulated bodies of Comparative Example 7 were obtained in the same manner as Example 5 except in that the pulverizing process using a bead mill was performed such that the average particle size (D50) of olivine-type lithium manganese iron phosphate was in a range of 140 nm to 160 nm, inclusive.

### Comparative Examples 8 and 9

Comparative Examples 8 and 9 were obtained by increasing the mixing amount of the fructose serving as a carbon source.

The granulated bodies of Comparative Example 8 were obtained in the same manner as Example 5 except in that the total carbon amount was adjusted such that the total carbon amount relative to 100 parts by mass of olivine-type lithium manganese iron phosphate was 3.2 parts by mass.

The granulated bodies of Comparative Example 9 were obtained in the same manner as Example 5 except in that the total carbon amount was adjusted such that the total carbon amount relative to 100 parts by mass of olivine-type lithium manganese iron phosphate was 5.1 parts by mass.

### Comparative Example 10

Comparative Example 10 was obtained by changing the timing of adding the citric acid. The granulated bodies of Comparative Example 10 were obtained in the same manner as Example 1 except in that citric acid (2 g) was not added to the first slurry, and was added to the second slurry after the pulverizing process using a bead mill.

### Analysis of Granulated Bodies

The granulated bodies of the examples and the comparative examples were measured for the particle size of the primary particles, the pore volume in a pore size range of 2 nm to 300 nm, inclusive, and the carbon content. Table 2 shows the results.

The particle size of the primary particles was calculated as follows. First, the SAXS method was used to calculate the particle size distribution of the primary particles on the assumption that the primary particles are spherical. Then, the average particle size (D50) was obtained from the particle size distribution as the particle size of the primary particles.

The pore volume was calculated as follows. The pores of the positive electrode active material were measured by using a specific surface area/pore distribution measuring device. The cumulative pore distribution of the granulated bodies in a region in which the pore size is 2 nm or greater and 300 nm or less was obtained from an analysis by the BJH method. The pore sizes were plotted on a horizontal axis, and the cumulative pore volumes were plotted on a vertical axis. Then, a difference between the cumulative pore volume relative to the pore size of 2 nm and the pore volume relative to the pore size of 300 nm the pore volume was calculated to obtain the pore volume in the pore size range of 2 nm to 300 nm, inclusive.

The carbon content was measured by using a carbon/sulfur analysis apparatus.

### Preparation of Positive Electrode

The positive electrode mixture was applied to a surface of an aluminum foil having a thickness of 15 µm. The applied positive electrode mixture was dried to produce a positive electrode including a positive electrode active material layer formed on a side of a positive electrode current collector. In the slurry used as the positive electrode mixture in each of the examples and comparative examples, a solid content mass ratio of the granulated bodies (positive electrode active material), carbon nanotubes (conductive aid), carboxymethyl cellulose (binder), and styrene-butadiene rubber (binder) was 98.25 : 0.05 : 0.4 : 1.3. In this slurry, the solvent was water. Then, the weight per unit area of the positive electrode active material layer in the positive electrode was measured. The measurement values were all approximately 65 to 75 mg/cm².

### Evaluation of Film-Forming Property

The state of the surface of the positive electrode active material layer was visually evaluated. Table 2 shows the results. The evaluation standards were set as follows. Fig. 4A shows a photograph of the positive electrode active material layer in Example 1, in which the evaluation of the film-forming property was "o". Fig. 4B shows a photograph of the positive electrode active material layer in Comparative Example 1, in which the evaluation of the film-forming property was "x".
"o": The surface of the positive electrode active material layer does not include cracks.
"x": The surface of the positive electrode active material layer includes cracks.

### Electrochemical Test

A cathode half-cell was prepared using the positive electrodes evaluated as "o" for the film-forming property. A 25 mm square piece was cut from those positive electrodes to serve as a cathode (evaluation electrode), and a 27 mm square piece was cut from a lithium metal foil having a thickness of 200 µm to serve as an anode. Then, a separator was arranged between the cathode and the anode to form an electrode body battery. The electrode body battery was laminated by an exterior material, and a non-aqueous electrolyte was injected into the exterior material. Subsequently, the exterior material was sealed to form a half-cell for an electrochemical test. The separator was a glass filter manufactured by Hoechst Celanese Corporation. The non-aqueous electrolyte was obtained by dissolving lithium hexafluorophosphate in a mixed solvent, in which ethylene carbonate and diethyl carbonate were mixed at a volume ratio of 1 : 1, so that the concentration of lithium hexafluorophosphate as 1M.

The cathode half-cell was charged to 4.3 V at a fixed current of 0.05 C at 25°C, and then discharged to 3.0 V. The discharge capacity in this case was measured. Table 2 shows the results.

**Table 2**

| | **Citric Acid Mixing Asount (vs. LMFP)** | **Primary Particle Size (nm)** | **Pore Volume In Pore Size Range of 2 to 300 nm (cm³/g)** | **Carbon Content (mass%)** | **File-Forming Property Evaluation** | **Discharge Capacity (mAh/g)** |
|---|---|---|---|---|---|---|
| **Example 1** | **2** | **70** | **0.200** | **2.52** | **○** | **148.8** |
| **Example 2** | **3** | **68** | **0.176** | **2.51** | **○** | **149.1** |
| **Example 3** | **4** | **69** | **0.171** | **2.68** | **○** | **148.6** |
| **Example 4** | **5** | **66** | **0.156** | **2.67** | **○** | **141.9** |
| **Example 5** | **6** | **62** | **0.128** | **2.3** | **○** | **148.2** |
| **Example 6** | **8** | **63** | **0.138** | **2.33** | **○** | **141.6** |
| **Example 7** | **10** | **66** | **0.147** | **2.45** | **○** | **148.4** |
| **Example 8** | **10** | **79** | **0.129** | **2.27** | **○** | **147.6** |
| **Example 9** | **10** | **92** | **0.151** | **2.46** | **○** | **148.2** |
| **Example 10** | **10** | **61** | **0.129** | **2.5** | **○** | **147.0** |
| **Comparative Example 1** | **0** | **70** | **0.251** | **2.3** | **×** | **-** |
| **Comparative Example 2** | **0.5** | **67** | **0.234** | **2.26** | **×** | **-** |
| **Comparative Example 3** | **1** | **69** | **0.222** | **2.32** | **×** | **-** |
| **Comparative Example 4** | **15** | **88** | **0.467** | **2.56** | **×** | **-** |
| **Comparative Example 5** | **0** | **140** | **0.152** | **2.39** | **○** | **139.0** |
| **Comparative Example 6** | **6** | **110** | **0.151** | **2.43** | **○** | **141.0** |
| **Comparative Example 7** | **6** | **150** | **0.156** | **2.3** | **○** | **132.0** |
| **Comparative Example 8** | **6** | **68** | **0.138** | **3.2** | **○** | **139.9** |
| **Comparative Example 9** | **6** | **70** | **0.156** | **5.11** | **○** | **133.5** |
| **Comparative Example 10** | **2** | **66** | **0.301** | **2.54** | **×** | **-** |

As shown in Table 2, the granulated bodies of Examples 1 to 10 satisfied all of the following three conditions.
Condition 1: The particle size of the primary particles is 100 nm or less.
Condition 2: The pore volume is 0.2 cm³/g or less.
Condition 3: The carbon content is 3.0 mass% or less.

No crack was observed in the surface of the positive electrode active material layers that were formed using the granulated bodies of Examples 1 to 10 as the positive electrode active material. When the granulated bodies of Examples 1 to 10 were used as the positive terminal, the discharge capacity was 147 to 149.1 mAh/g.

In Comparative Examples 1 to 4, the pore volume was relatively large. Comparative Examples 1 to 4 satisfied Condition 1 and Condition 3, but did not satisfy Condition 2 related to the pore volume. Cracks were observed in the surface of the positive electrode active material layers that were formed using the granulated bodies of Comparative Examples 1 to 4 as the positive electrode active material. These results indicate that it is effective to set the pore volume to 0.2 cm³/g or less in order to ensure a satisfactory film-forming property when forming the positive electrode active material layer having a relatively large weight per unit area.

In Comparative Examples 5 to 7, the particle size of the primary particles was relatively large. Comparative Examples 5 to 7 satisfied Condition 2 and Condition 3, but did not satisfy Condition 1. No crack was observed in the surface of the positive electrode active material layers that were formed using the granulated bodies of Comparative Examples 5 to 7 as the positive electrode active material. Nonetheless, when the granulated bodies of Comparative Examples 5 to 7 were used as the positive electrode active material, the discharge capacity was 132 to 141 mAh/g, which is significantly lower than those when the granulated bodies of Examples 1 to 10 were used as the positive electrode active material.

In Comparative Examples 8 and 9, the carbon content was relatively large. Comparative Examples 8 and 9 satisfied Condition 1 and Condition 2, but did not satisfy Condition 3. No crack was observed in the surface of the positive electrode active material layers that were formed using the granulated bodies of Comparative Examples 8 and 9 as the positive electrode active material. Nonetheless, when the granulated bodies of Comparative Examples 8 and 9 were used as the positive electrode active material, the discharge capacity was 133.5 to 139.9 mAh/g, which is significantly lower than those when the granulated bodies of Examples 1 to 10 were used as the positive electrode active material.

These results of when the granulated bodies of Comparative Examples 5 to 9 were used indicate that the capacity of the lithium-ion secondary battery will not be increased only by appropriately forming the positive electrode active material layer having a relatively large weight per unit area. Also, in order to increase the capacity of the lithium-ion secondary battery, the particle size of the primary particles should be set to 100 nm or less and the carbon content should be set to 3.0 mass% or less, in addition to setting the pore volume to 0.2 cm³/g or less.

The relationship between the mixing amount of the citric acid and the pore volume of the obtained granulated bodies is now considered. Referring to the results of Examples 1 to 10 and Comparative Examples 1 to 3, in a range in which the mixing amount of the citric acid relative to 100 parts by mass of olivine-type lithium manganese iron phosphate was 10 parts by mass or less, the pore volume of the obtained granulated bodies decreased as the mixing amount of the citric acid increased. In contrast, in Comparative Example 4, in which the mixing amount of the citric acid was 15 parts by mass, the pore volume of the granulated bodies was more than two times greater than those of Examples 8 to 10, in which the mixing amount of the citric acid was 10 parts by mass. These results indicate that although the pore volume of the granulated bodies may be decreased by increasing the mixing amount of the carboxylic acid, such as citric acid, when the mixing amount of the carboxylic acid is increased to a specific amount or greater, the pore volume of the granulated bodies may be increased instead.

The timing of adding the citric acid is now considered. Comparative Example 10 was obtained by adding the citric acid to the second slurry after the pulverizing process, instead of adding the citric acid to the first slurry. The pore volume of the granulated bodies of Comparative Example 10 was 1.5 times greater than that of Example 1, which only differed from Comparative Example 10 in the timing of adding the citric acid. This result indicates that in order to reduce the pore volume, the pulverizing process should be performed under the presence of the carboxylic acid, such as citric acid.

## Claims

1. A positive electrode material for a lithium-ion secondary battery, the positive electrode material comprising:
granulated bodies each including a core and a carbon coating, the core being made of an olivine-type lithium manganese iron phosphate represented by a general formula LiMnₓFe_{y}PO₄ ("x" and "y" are numerical values satisfying "x + y = 1", "0 < x < 1", and "0 < y < 1"), the carbon coating being formed on a surface of the core, wherein
the core has a structure in which primary particles of the olivine-type lithium manganese iron phosphate are aggregated,
the primary particles have a particle size of 100 nm or less,
the granulated bodies have a pore volume of 0.2 cm³/g or less in a pore size range of 2 nm to 300 nm, inclusive, and
the granulated bodies have a carbon content of 1.8 mass% or greater and 3.0 mass% or less.

2. A positive electrode for a lithium-ion secondary battery, the positive electrode comprising:
a positive electrode current collector including a first surface; and
a positive electrode active material layer formed on the first surface of the positive electrode current collector,
wherein the positive electrode active material layer contains the positive electrode material for a lithium-ion secondary battery according to claim 1.

3. The positive electrode according to claim 2, wherein the positive electrode active material layer has a weight per unit area of 30 mg/cm² or greater and 100 mg/cm² or less.

4. A method for manufacturing a positive electrode material for a lithium-ion secondary battery, the method comprising:
pulverizing particles of an olivine-type lithium manganese iron phosphate represented by a general formula LiMnₓFe_{y}PO₄ ("x" and "y" are numerical values satisfying "x + y = 1", "0 < x < I", and "0 < y < 1") under the presence of an aqueous solvent, a carbon source, and a carboxylic acid to prepare a slurry containing a pulverized material of the olivine-type lithium manganese iron phosphate;
spray drying the slurry to obtain aggregates of the pulverized material; and
calcining the aggregates to carbonize the carbon source contained in the aggregates.

5. The method according to claim 4, wherein the carboxylic acid is citric acid.

6. The method according to claim 4 or 5, wherein a content of the carboxylic acid in the slurry relative to 100 parts by mass of the olivine-type lithium manganese iron phosphate is 2 parts by mass or greater and 10 parts by mass or less.
